Europäisches Patentamt

European Patent Office

Office européen des brevets

(11) Veröffentlichungsnummer: **0 357 090**
**A2**

## (12) EUROPÄISCHE PATENTANMELDUNG

(21) Anmeldenummer: **89116315.6**

(22) Anmeldetag: **04.09.89**

(51) Int. Cl.⁵: **A01F 12/40**

(30) Priorität: **02.09.88 DE 3829937**

(43) Veröffentlichungstag der Anmeldung:
**07.03.90 Patentblatt 90/10**

(84) Benannte Vertragsstaaten:
**BE DE FR GB IT SE**

(71) Anmelder: **BISO Bitter GmbH. & Co.KG.**
**Ladestrasse 3 - 9**
**D-4986 Rödinghausen-Bruchmühlen(DE)**

(72) Erfinder: **Scharf, Alois**
**Kohne Weg 7**
**D-4520 Melle 8 St. Annen(DE)**

(74) Vertreter: **Zinnecker, Armin, Dipl.-Ing. et al**
**Rechtsanwälte Eduard Lorenz - Dipl.-Ing.**
**Hans-K. Gossel Dr. Ina Philipps - Dr. Paul B.**
**Schäuble Dr. Siegfried Jackermeier Dipl.-Ing.**
**Armin Zinnecker**
**Widenmayerstrasse 23 D-8000 München**
**22(DE)**

(54) **Mähdrescher mit Anbauhäcksler.**

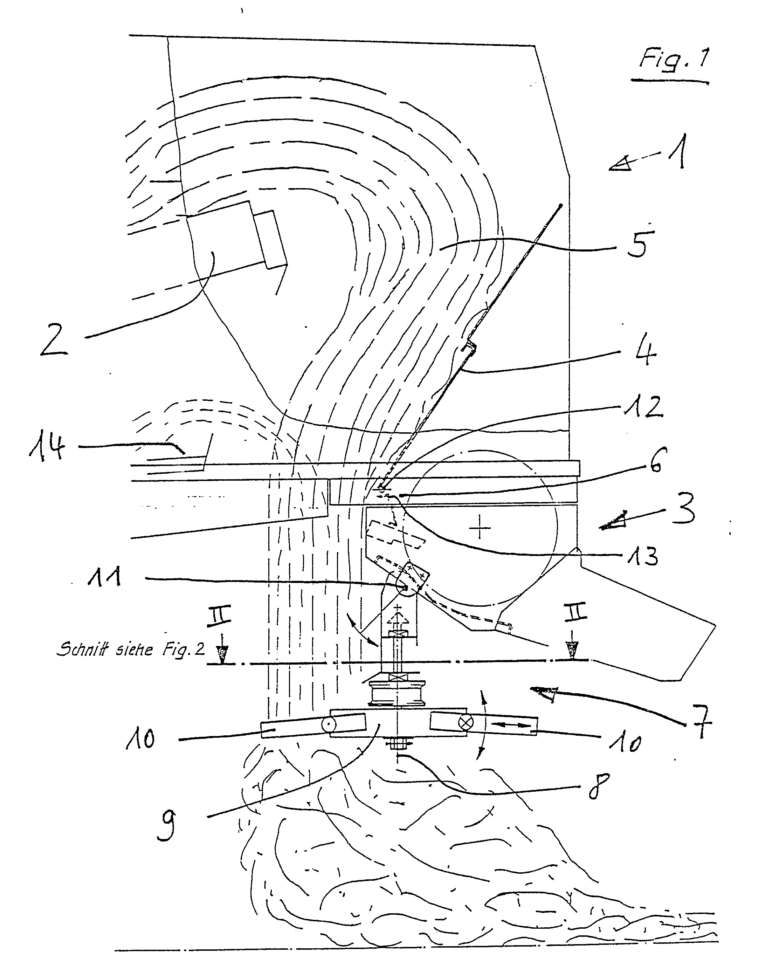

(57) Ein Mähdrescher (1) besitzt das Stroh abwerfende Schüttler (2) sowie einen Anbauhäcksler (3) und ein unter den Schüttlern (2) geneigt angeordnetes Strohleitblech (4), welches das Stroh (5) wahlweise in die Einzugsöffnung (6) des Anbauhäckslers (3) oder an dem Anbauhäcksler (3) vorbei führt. Um einen derartigen Mähdrescher dahingehend zu verbessern, daß neben dem Häckselbetrieb und der Langstrohablage auch noch eine Strohverteilung und Spreuverteilung ermöglicht wird, ist ein Strohverteiler (7) mit mindestens einem unter dem Häcksler (3) angeordneten, um eine Rotor-Drehachse (8) antreibbaren Rotor (9) mit schaufelartigen Blättern (10) zum Verteilen des Strohs (5) vorgesehen, das an dem Anbauhäcksler (3) vorbei geführt wird (Fig. 1).

Fig. 1

## Mähdrescher mit Anbauhäcksler

Die Erfindung betrifft einen Mähdrescher mit das Stroh abwerfenden Schüttlern oder einer anderen Zubringervorrichtung, mit einem Anbauhäcksler und mit einem unter den Schüttlern geneigt angeordneten Strohleitblech, welches das Stroh wahlweise in die Einzugsöffnung des Anbauhäckslers oder an dem Anbauhäcksler vorbei führt.

Ein derartiger Mähdrescher ist aus der DE-PS 35 28 538 bekannt. Dort ist ein geneigt angeordnetes Strohleitblech vorgesehen, das um eine horizontale, oberhalb der inneren Kante der Einzugsöffnung des Anbauhäckslers verlaufende Achse schwenkbar gelagert ist. Das Strohleitblech kann nach hinten geschwenkt werden, so daß es den Anbauhäcksler abdeckt. Das von den Schüttlern kommende Stroh wird dann lang abgelegt. Das Strohleitblech kann auch nach vorne verschwenkt werden, so daß das Stroh von den Schüttlern dem Anbauhäcksler zugeführt wird. Es ist also wahlweise Häckselbetrieb und den Häcksler umgehende Langstrohablabe möglich.

Aufgabe der Erfindung ist es, einen Mähdrescher der eingangs angegebenen Art dahingehend zu verbessern, daß neben dem Häckselbetrieb und der Langstrohablage auch noch eine Strohverteilung ermöglicht wird.

Die erfindungsgemäße Lösung dieser Aufgabe ist gekennzeichnet durch einen Strohverteiler mit mindestens einem unter dem Häcksler angeordneten, um eine Rotor-Drehachse antreibbaren Rotor mit schaufelartigen Blättern zum Verteilen des Strohs, das an dem Anbauhäcksler vorbei geführt wird.

Mit dem erfindungsgemäßen Mähdrescher sind drei verschiedene Betriebsarten möglich: Bei der einen Stellung des Strohleitblechs wird das Stroh in die Einzugsöffnung des Anbauhäckslers geführt und gehäckselt. Bei der anderen Stellung des Strohleitblechs wird das Stroh an dem Anbauhäcksler vorbei geführt. Wenn sich in dieser Stellung des Strohleitblechs der Rotor des Strohverteilers nicht dreht, wird das Stroh in der aus der DE-PS 35 28 538 bekannten Weise lang abgelegt. Es ist jedoch auch möglich, den Rotor anzutreiben; dann wird das Langstroh verteilt und breitgestreut.

Es ist noch eine weitere Betriebsart möglich. Man kann bei Häckselbetrieb und auch bei Langstrohverteilung Spreu und Kurzstroh, die über eine vorhandene Reinigungsvorrichtung wie z.B. Siebe laufen, dadurch breitstreuen, daß der Strohverteiler in Bewegung gesetzt wird, d.h. durch Inbetriebnahme des Strohverteilers.

Aus der DE-PS 35 29 801 ist ein Spreuverteiler bekannt, der aus zwei gegenläufig angetriebenen Rotoren mit mindestens zwei schaufelartigen Blättern sowie aus einem mit einem hinteren Abdeckblech versehenen Tragrahmen besteht. Diesem Spreuverteiler wird die Spreu parallel zur Rotor-Drehachse zugeführt. Sie verläßt den vorbekannten Spreuverteiler in radialer Richtung, also parallel zum hinteren Abdeckblech. Der vorbekannte Spreuverteiler ist aufwendiger in der Herstellung.

Durch die Erfindung wird eine Kombination von integriertem Häcksler und Langstroh- sowie Spreuverteiler geschaffen, die es dem Betreiber des Mähdreschers ermöglicht, auf einfache Weise Stroh zu häckseln oder durch Verschwenken des Strohleitblechs langes Stroh und/oder Spreu auf den Stoppeln auszubreiten, beispielsweise zum Zwecke des anschließenden Abbrennens oder Einarbeitens. Wenn das Stroh nach dem Ausbreiten abgebrannt oder eingearbeitet werden soll, soll es in einem möglichst lückenlosen Strohteppich ausgebreitet werden, der gut durchgetrocknet ist. Hierdurch wird es möglich, auf einfache Weise folgende Praxis der Strohbewältigung durchzuführen: Der Mähdrescher-Betreiber fährt zunächst eine oder auch zwei Runden mit seinem Mähdrescher im Häckselbetrieb um die mähdruschreife Getreidefläche. Dieser Streifen rund um die Getreidefläche wird später gepflügt oder so bearbeitet, daß kein Stroh an der Oberfläche bleibt. Anschließend soll in der inneren großen Fläche das Stroh möglichst gleichmäßig verteilt als Langstroh auf die stehenbleibenden Stoppeln zum späteren Abbrennen abgelegt werden. Bisher wurden die einzelnen Strohschwaden so, wie sie aus der Mähdrescherhaube fallen, abgebrannt. Der Häcksler wurde hierzu abgebaut, und der Mähdrescher wurde mit einem oder zwei horizontal rotierenden Schlägern zum Breitstreuen versehen. Nach der erfindungsgemäßen Lösung ist der Strohverteiler unter dem Häcksler angeordnet, so daß das an dem Anbauhäcksler vorbei geführte Stroh durch diesen Strohverteiler geleitet und von ihm breitgestreut wird. Es entsteht ein lückenloser Strohteppich, der gut durchtrocknet. Das Stroh wird dann nur an einer Seite angezündet und brennt einwandfrei über die ganze Fläche ab.

Die Umstellung von einer Betriebsart zu einer anderen Betriebsart ist sehr einfach und schnell möglich. Der Strohfluß vom Schüttler wird durch einfaches Umlegen des Strohleitblechs entweder zum Häcksler oder zum Strohverteiler geleitet. Eine Mon tage in irgendeiner Form ist nicht erforderlich; es genügt die Umstellung des Strohleitblechs, die einfach und schnell durchführbar ist. Der Häcksler kann beim Langstroh-Breitstreuen außer Betrieb gesetzt werden, so daß der Mähdreschermotor ein Maximum an Kraft für den eigentlichen Mähdrusch zur Verfügung hat.

Vorteilhafte Weiterbildungen sind in den Unteransprüchen beschrieben.

Vorzugsweise verläuft die Rotor-Drehachse im wesentlichen vertikal.

Der Strohverteiler kann zwei Rotoren mit schaufelartigen Blättern besitzen. Die Rotoren sind vorzugsweise gegenläufig um parallele, beabstandete Achsen antreibbar. Der Antrieb der beiden Rotoren erfolgt vorzugsweise derart, daß die Umfangsgeschwindigkeit im Bereich zwischen den Rotor-Drehachsen parallel und gleichsinnig zur Mähdrescherfahrtrichtung gerichtet ist. Die Anordnung ist vorzugsweise derart getroffen, daß die Streubreite des Strohverteilers mindestens so groß ist wie die Breite des Mähdrescher-Schneidwerkes.

Der Strohverteiler kann um eine horizontale Achse schwenkbar gelagert sein. Vorzugsweise ist der Strohverteiler am Häcksler oberhalb der Rotoren schwenkbar gelagert. Durch diese schwenkbare Lagerung kann der Strohverteiler aus dem Strohfluß herausgeschwenkt werden, wenn das Stroh lang abgelegt werden soll. Eine verschwenkbare Lagerung des Strohverteilers ist insbesondere bei geringer Bodenfreiheit von Vorteil. Wenn der Strohverteiler vollständig weggeschwenkt werden kann, wird die Qualität der Langablage verbessert.

Das Strohleitblech kann um eine horizontale Achse schwenkbar gelagert und arretierbar sein. Vorzugsweise liegt die Strohleitblech-Schwenkachse oberhalb der inneren Kante der Einzugsöffnung des Anbauhäckslers. Die Strohleitblech-Schwenkachse kann über den Rotor-Drehachsen liegen. Weiterhin ist es möglich, daß die Strohverteiler-Schwenkachse zwischen den Rotor-Drehachsen und der Strohleitblech-Schwenkachse liegt. Unter den Schüttlern können Siebkästen angeordnet sein.

Nach einer weiteren vorteilhaften Weiterbildung ist der Strohverteiler durch einen Riementrieb antreibbar. Stattdessen ist aber auch ein Antrieb durch einen Hydromotor, durch einen Elektromotor oder einen Pneumatikmotor möglich.

Bei einem Antrieb durch einen Riementrieb kann ein erster Antriebsriemen um eine in der Strohverteiler-Schwenkachse drehbar gelagerte, angetriebene Rolle geführt sein, auf deren Achse eine zweite, den Strohverteiler über einen zweiten Antriebsriemen antreibende Rolle sitzt. Da die angetriebene Rolle des ersten Antriebsriemens koaxial mit der Strohverteiler-Schwenkachse ist, wird der Antrieb durch eine Verschwenkung des Strohverteilers nicht beeinträchtigt. Der Antrieb des Strohverteilers ist also in jeder Schwenklage dieses Strohverteilers möglich.

Der Riementrieb kann weiterhin über Rollen geführt sein, die gehäusefest oder auf dem Rahmen des Strohverteilers derart drehbar gelagert sind, daß die Riemenspannung bei einer Verschwenkung des Strohverteilers gleich bleibt. Hierzu können für die Rollen abstützende Federn vorgesehen sein.

Ausführungsbeispiele der Erfindung werden nachstehend anhand der beigefügten Zeichnungen im einzelnen erläutert. In den Zeichnungen zeigt

Fig. 1 ein Ausführungsbeispiel der Erfindung in einer Seitenansicht,

Fig. 2 einen Schnitt längs der Linie II-II in Fig. 1,

Fig. 3 das in Fig. 1 gezeigte Ausführungsbeispiel bei Langstrohablage,

Fig. 4 das in den Fig. 1 und 3 gezeigte Ausführungsbeispiel bei Häckslerbetrieb,

Fig. 5 das in den Fig. 1, 3 und 4 gezeigte Ausführungsbeispiel bei Häckslerbetrieb und laufenden Rotoren für die Spreuverteilung,

Fig. 6 ein weiteres Ausführungsbeispiel in einer Seitenansicht,

Fig. 7 ein weiteres Ausführungsbeispiel in einer Seitenansicht,

Fig. 8 ein weiteres Ausführungsbeispiel in einer Seitenansicht.

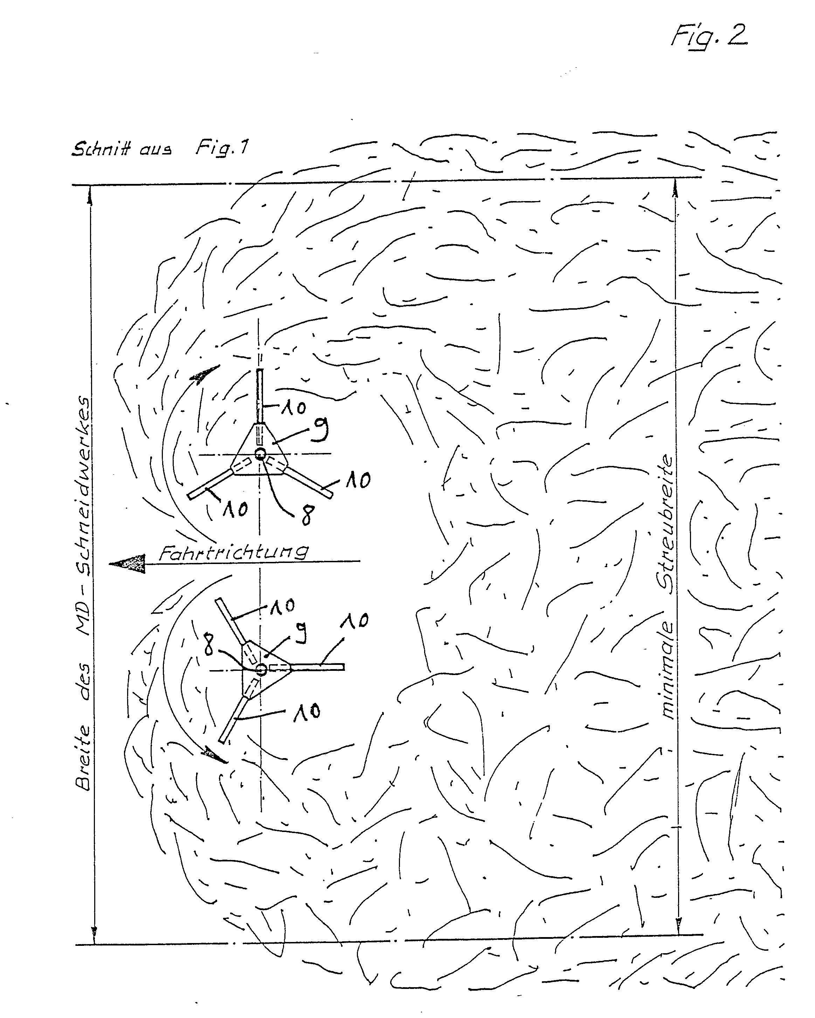

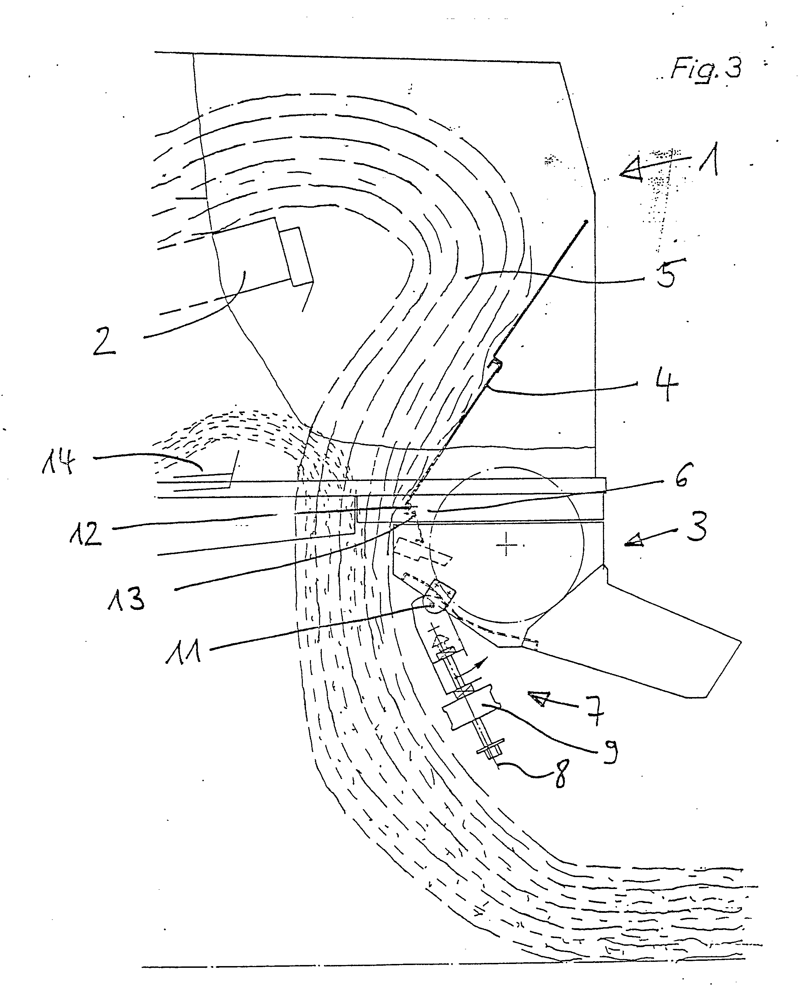

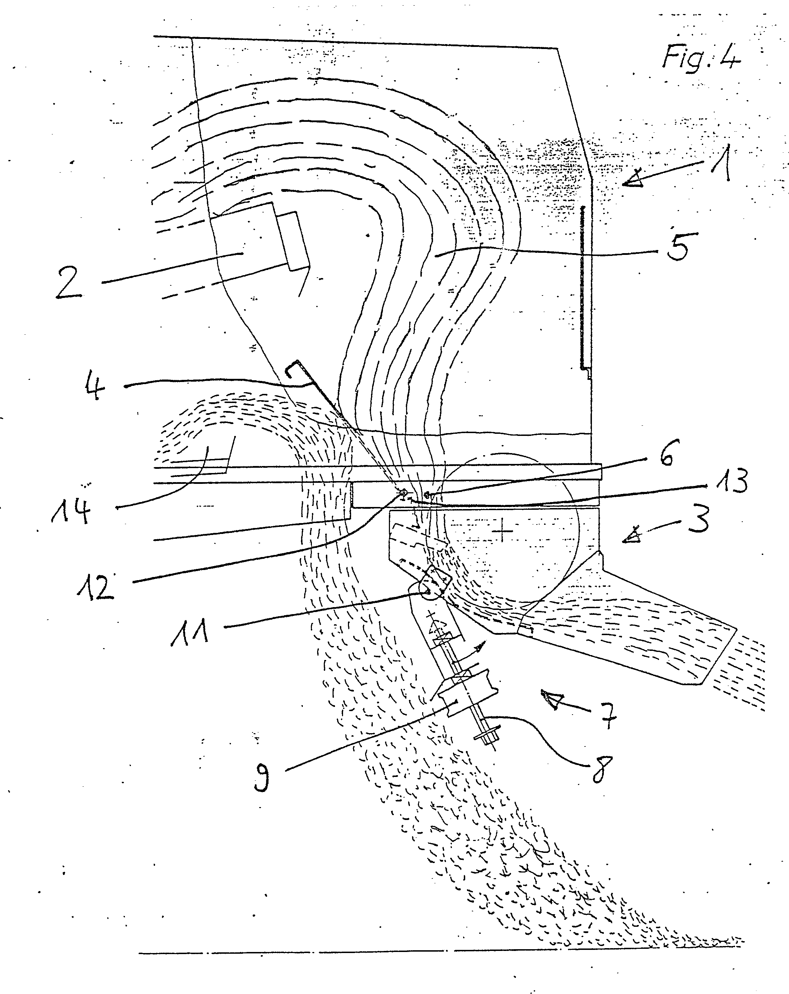

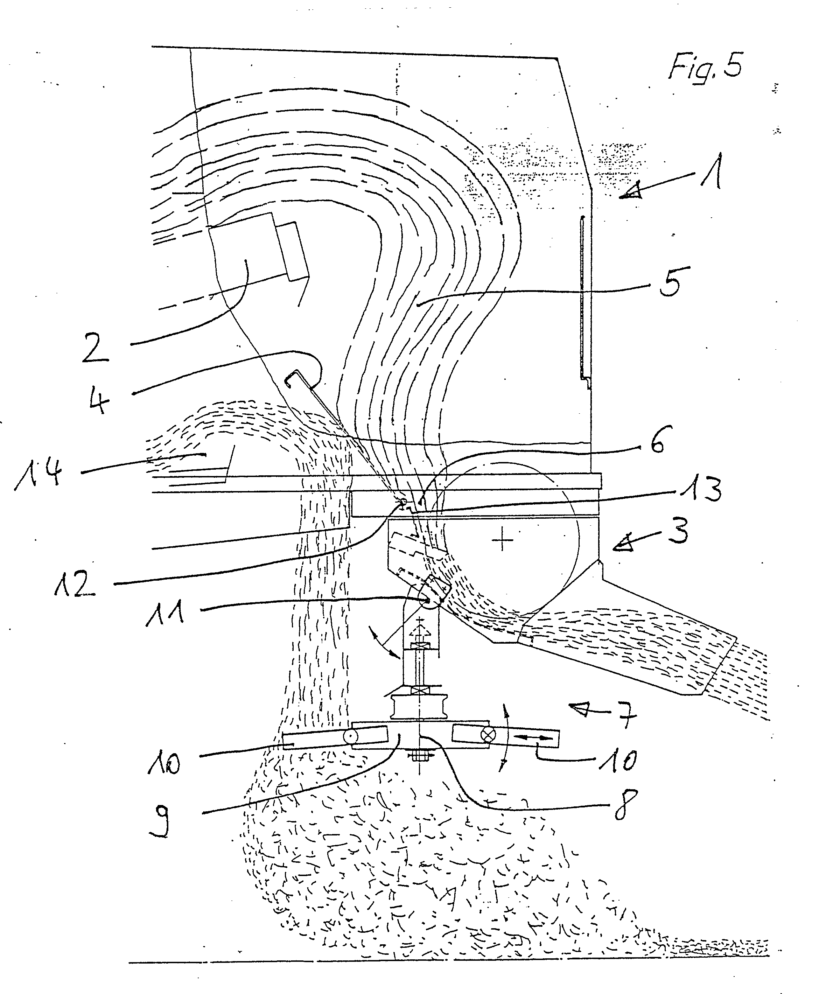

Der in Fig. 1 gezeigte Mähdrescher 1 besitzt das Stroh abwerfende Schüttler 2 sowie einen Anbauhäcksler 3 und ein unter den Schüttlern 2 geneigt angeordnetes Strohleitblech 4, welches um eine horizontale Achse 12 schwenkbar gelagert und arretierbar ist. Durch das Strohleitblech 4 kann das Stroh 5 also wahlweise in die Einzugsöffnung 6 des Anbauhäckslers 3 (Fig. 4 und 5) oder an dem Anbauhäcksler 3 vorbei (Fig. 1 und 3) geführt werden. Unter dem Anbauhäcksler 3 ist ein Strohverteiler 7 angeordnet, der zwei gegenläufig um parallele, beabstandete Achsen 8 angetriebene Rotoren 9 mit schaufelartigen Blättern 10 besitzt. Die Rotoren 9 sind unter dem Häcksler 3 angeordnet. Die Rotor-Drehachsen 8 verlaufen vertikal (siehe auch Fig. 2). Der Strohverteiler 7 ist um eine horizontale Achse 11 schwenkbar gelagert. Der Strohverteiler 7 ist am Häcksler 3 oberhalb der Rotoren 9 schwenkbar 11 gelagert. Die Strohleitblech-Schwenkachse 12 liegt oberhalb der inneren Kante 13 der Einzugsöffnung 6 des Anbauhäckslers 3. Die Strohleitblech-Schwenkachse 12 liegt über den Rotor-Drehachsen 8. Die Strohverteiler-Schwenkachse 11 liegt zwischen den Rotor-Drehachsen 8 und der Strohleitblech-Schwenkachse 12. Unter den Schüttlern 2 sind Siebkästen 14 angeordnet.

Das Strohleitblech 4 besteht aus einem unteren Teil, der um die Schwenkachse 12 drehbar gelagert ist, und einem oberen Teil, dessen oberes Ende an dem Mähdrescher 1 um eine horizontale Achse drehbar gelagert ist. Das obere Ende des unteren Teils des Strohleitblechs 4 ist in einer Abkantung am unteren Ende des oberen Teils dieses Strohleitblechs abgestützt. Wenn das Strohleitblech aus der in den Fig. 1 und 3 gezeigten Stellung nach vorne in die in den Fig. 4 und 5 gezeigte Stellung verschwenkt wird, wird der obere Teil des Strohleitblechs nach hinten weggeschwenkt (vgl. Fig. 4 und 5). Der untere Teil des Strohleitblechs 4 ist um die Schwenkachse 12 verschwenkt worden. Durch die Zweiteilung des Strohleitblechs 4 wird die Querschnittsfläche zwischen den Schüttlern 2 und der hinteren Mähdrescherwand vergrößert. Es sind auch andere Ausgestaltungsmöglichkeiten für das Strohleitblech 4 denkbar, beispielsweise ein austeleskopierbares und einfahrbares Strohleitblech. In der in den Fig. 1 und 3 gezeigten Stellung wird das Strohleitblech dann austeleskopiert, während es in der nach vorne verschwenkten, in den Fig. 4 und 5 gezeigten Stellung eingefahren wird.

Wie aus Fig. 2 ersichtlich, werden Langstroh und Kaff-Spreu über die gesamte Schnittbreite des Mähdreschers verteilt, wenn sich der Strohverteiler 7 in der in Fig. 1 gezeigten Stellung befindet und wenn die Rotoren 9 mit den Schleuderwerkzeugen 10 gegenläufig angetrieben werden. Die Rotoren 9 werden dabei derart gegenläufig angetrieben, daß die Umfangsgeschwindigkeit der Schleuderwerkzeuge 10 im Bereich zwischen den Rotor-Drehachsen 8 parallel und gleichsinnig zur Mähdrescher-Fahrtrichtung gerichtet ist.

Die Fig. 3 zeigt den Strohverteiler 7 in abgeklappter, also nach hinten weggeschwenkter Stellung. Die Schleuderwerkzeuge 10 sind nach wie vor vorhanden, jedoch in der Zeichnung nicht dargestellt. Das Langstroh 5 fällt in einem Schwad durch die stillstehenden Rotorblätter 10 hindurch auf das Stoppelfeld. Das Kaff fällt ebenfalls von den Sieben 14 schlecht verteilt auf das Stoppelfeld. Langstroh und Kaff können bei mitlaufendem Verteiler (Fig. 5) breitgestreut werden.

In der Fig. 4 ist das Strohleitblech 4 nach vorne verschwenkt. Der obere Teil des Strohleitblechs ist nach hinten an die Mähdrescher-Rückwand verschwenkt. Das Langstroh wird dem Häcksler 3 zugeführt und gehäckselt. Der Häcksler ist von einer an sich bekannten Bauart. Er besitzt um eine horizontale Achse rotierende Messer und feststehende Gegenmesser. Das Kaff-Spreu wird durch den über die Siebe geleiteten Windstrom ausgeworfen. Auch in der Fig. 4 ist der Strohverteiler 7 nach hinten weggeschwenkt; die Schleuderwerkzeuge 10 sind ebenfalls nach wie vor vorhanden, aus Gründen der Vereinfachung jedoch zeichnerisch nicht dargestellt.

Die Fig. 5 zeigt Häckselbetrieb und Kaffverteilen durch die rotierenden Schleuderwerkzeuge 10. Die Rotoren 9 des Strohverteilers 7 sind also gegenläufig angetrieben, wodurch das Kaff über die gesamte Mähdrescher-Schnittbreite verteilt wird. Das Strohleitblech 4 ist nach vorne verschwenkt.

Die Anordnung des Strohverteilers 7 ist derart getroffen, daß die Schleuderwerkzeuge 10 nur während des Durchlaufens des in Mähdrescher-Fahrtrichtung vorne liegenden Halbkreises wirksam werden. Die Schleuderwerkzeuge 10 bewegen sich in diesem Bereich voneinander weg, so daß eine wirksame Breitstreuung gewährleistet ist.

Die Verschwenkbarkeit des Strohverteilers ermöglicht auch eine gute Anpassung an den Zustand der Spreu-Kaff. Bei feuchter Spreu kann der Strohverteiler nach vorne (also in den Figuren 1, 3, 4 und 5 nach links) verschwenkt werden; hierdurch wird die feuchte Spreu-Kaff besser und vollständiger erfaßt.

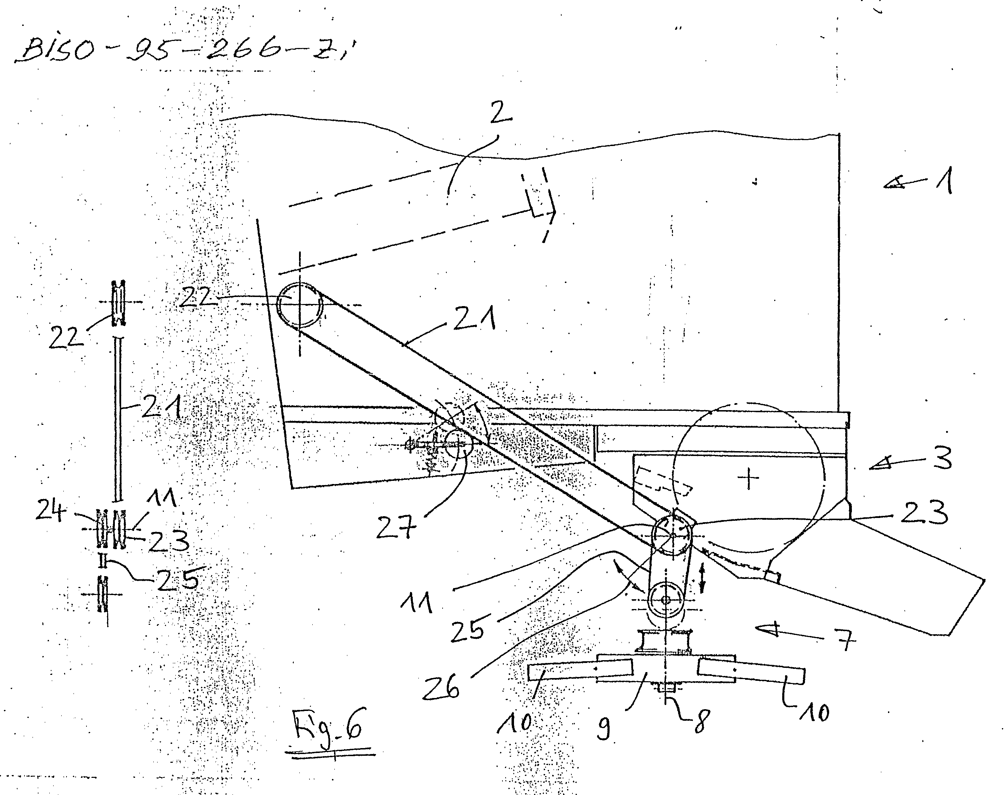

Die Fig. 6 zeigt eine Möglichkeit des Antriebs des Strohverteilers 7 durch einen Riementrieb. Ein erster Antriebsriemen 21 wird von einer antreibenden Rolle 22 angetrieben. Der erste Antriebsriemen 21 ist um eine angetriebene Rolle 23 geführt, die in der Strohverteiler-Schwenkachse 11 drehbar gelagert ist. Auf der Achse der angetriebenen Rolle 11 sitzt eine antreibende Rolle 24, die den Strohverteiler 7 über einen zweiten Antriebsriemen 25 antreibt. Da die Rollen 23, 24 mit der Strohverteiler-Schwenkachse 11 koaxial sind, kann der Strohverteiler 7 in jeder Schwenklage (Doppelpfeil 26) ohne Beeinträchtigung angetrieben werden. Der erste Antriebsriemen 21 wird durch die Spannrolle 27 gespannt. Die Antriebsriemen 21, 25 müssen nicht abgenommen werden, sondern können immer in ihrer Einspannung verbleiben, wodurch sich eine erhebliche Vereinfachung bei der Handhabung ergibt.

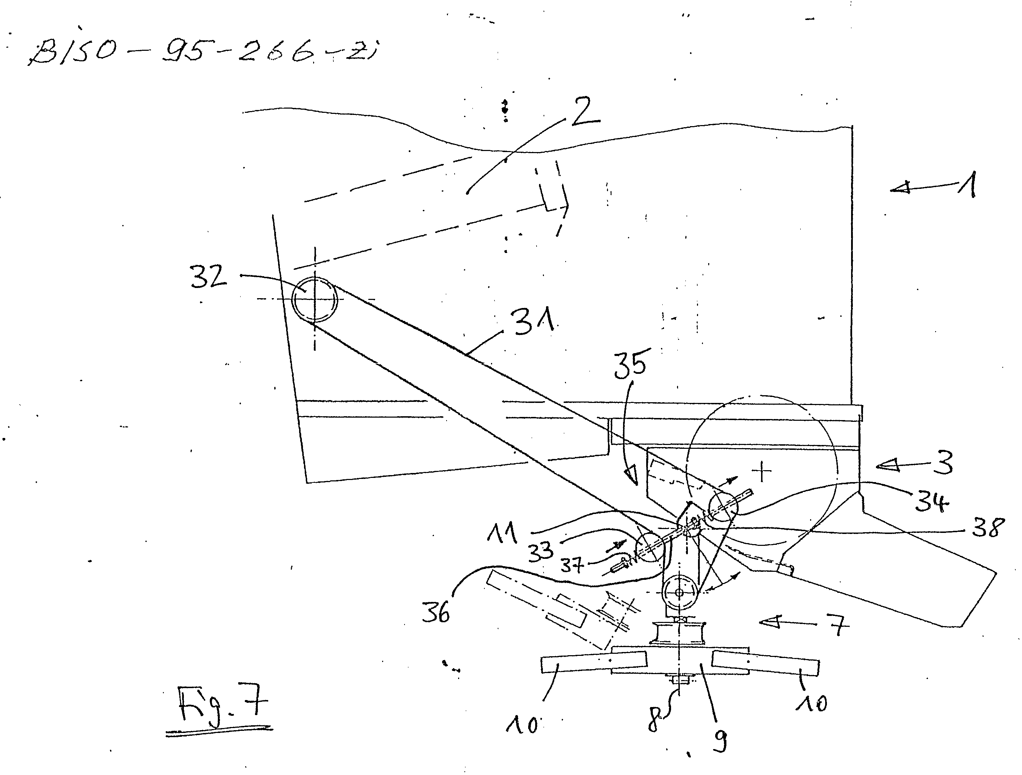

Die Fig. 7 zeigt ein weiteres Ausführungsbeispiel. Hier ist nur ein einziger Antriebsriemen 31 vorhanden, der von einer Antriebsrolle 32 angetrieben wird. Der Riementrieb 31 ist über Rollen 33, 34 geführt, die gehäusefest gelagert sind. Die Spannvorrichtung 35, bestehend aus Gewindestange 36 und Federn 37, 38, ist im Drehpunkt 11 des Strohverteilers 7 am Häcksler 3 fest angeordnet. Bei einer Verschwenkung des Strohverteilers 7, beispielsweise in die in der Fig. 7 strichpunktiert gezeichnete Stellung, schwenkt die Gewindestange 36 also nicht mit. Der Ausgleich erfolgt durch die Federn 37, 38. Die Riemenspannung bleibt also bei einer Verschwenkung des Strohverteilers 7 im wesentlichen gleich.

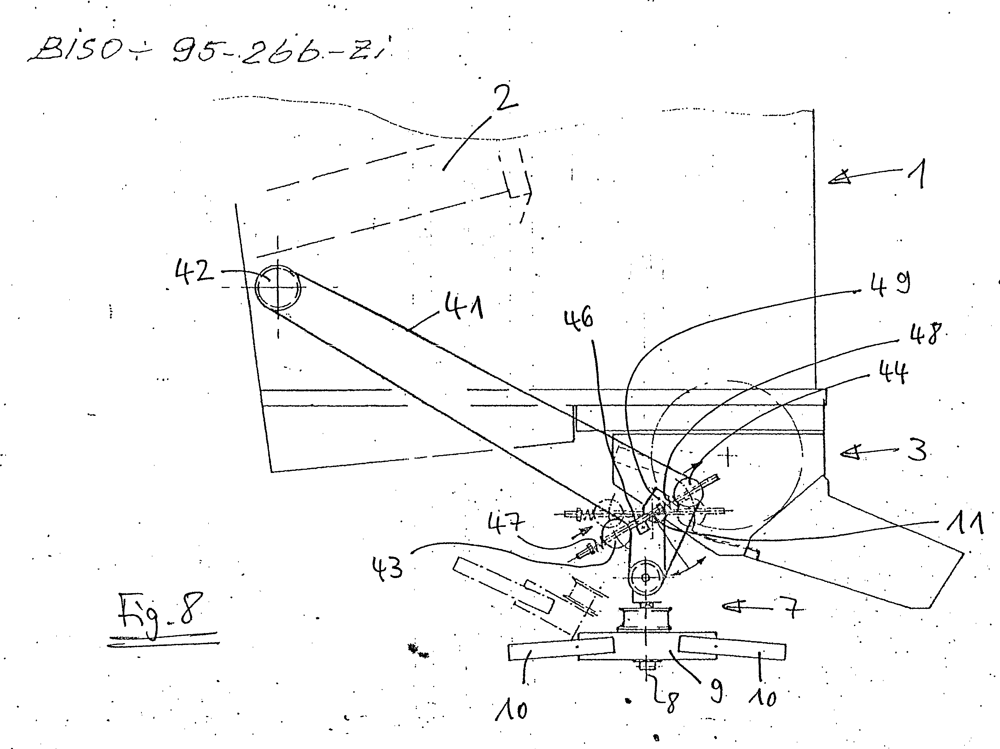

Die Fig. 8 zeigt ein weiteres Ausführungsbeispiel. Auch hier ist nur ein einziger Antriebsriemen 41 vorhanden, der von einer Antriebsrolle 42 angetrieben wird. Der Antriebsriemen 41 läuft über Rollen 43, 44, die auf dem Rahmen des Strohverteilers 7 drehbar gelagert sind. Die Halterung für beide Spannrollen 43, 44 ist mit dem U-förmigen Halterahmen 49 des Strohverteilers 7 fest verbunden, schwenkt also mit diesem mit, wenn der Strohverteiler 7 beispielsweise in die in Fig. 8 strichpunktiert gezeichnete Stellung verschwenkt wird. Der Ausgleich erfolgt auch hier über Federn 47, 48. Die Gewindestange 46 schwenkt ebenfalls mit. Bei einer Verschwenkung des Strohverteilers 7 bleibt die Spannung des Riemens 41 im wesentlichen gleich.

## Ansprüche

1. Mähdrescher (1) mit das Stroh abwerfenden Schüttlern (2) oder einer anderen Zubringervorrichtung, mit einem Anbauhäcksler (3) und mit einem unter den Schüttlern (2) geneigt angeordneten Strohleitblech(4), welches das Stroh (5) wahlweise in die Einzugsöffnung (6) des Anbauhäckslers (3) oder an dem Anbauhäcksler (3) vorbei führt, **gekennzeichnet durch** einen Strohverteiler (7) mit mindestens einem unter dem Häcksler (3) angeordneten, um eine Rotor-Drehachse (8) antreibbaren Rotor (9) mit schaufelartigen Blättern (10) zum Verteilen des Strohs (5), das an dem Anbauhäcksler (3) vorbei geführt wird.

2. Mähdrescher nach Anspruch 1, dadurch gekennzeichnet, daß die Rotor-Drehachse (8) im wesentlichen vertikal verläuft.

3. Mähdrescher nach Anspruch 1 oder 2, dadurch gekennzeichnet, daß der Strohverteiler (7) zwei Rotoren (9) mit schaufelartigen Blättern (10) besitzt, die vorzugsweise gegenläufig um parallele, beabstandete Achsen (8) antreibbar sind, und zwar vorzugsweise derart, daß die Umfangsgeschwindigkeit im Bereich zwischen den Rotor-Drehachsen (8) parallel und gleichsinnig zur Mähdrescher-Fahrtrichtung gerichtet ist.

4. Mähdrescher nach einem der vorhergehenden Ansprüche, dadurch gekennzeichnet, daß der Strohverteiler (7) um eine horizon tale Achse (11) vorzugsweise am Häcksler (3) vorzugsweise oberhalb der Rotoren (9) schwenkbar gelagert ist.

5. Mähdrescher nach einem der vorhergehenden Ansprüche, dadurch gekennzeichnet, daß das Strohleitblech (4) um eine horizontale Achse (12) schwenkbar gelagert und arretierbar ist, wobei die Strohleitblech-Schwenkachse (12) vorzugsweise oberhalb der inneren Kante (13) der Einzugsöffnung (6) des Anbauhäckslers (3) liegt.

6. Mähdrescher nach Anspruch 5, dadurch gekennzeichnet, daß die Strohleitblech-Schwenkachse (12) über den Rotor-Drehachsen (8) liegt.

7. Mähdrescher nach Anspruch 5 oder 6, dadurch gekennzeichnet, daß die Strohverteiler-Schwenkachse (11) zwischen den Rotor-Drehachsen (8) und der Strohleitblech-Schwenkachse (12) liegt.

8. Mähdrescher nach einem der vorhergehenden Ansprüche, dadurch gekennzeichnet, daß unter den Schüttlern (2) Siebkästen (14) angeordnet sind.

9. Mähdrescher nach einem der Ansprüche 4 bis 8, dadurch gekennzeichnet, daß der Strohverteiler (7) durch einen Riementrieb (21, 25; 31; 41) antreibbar ist.

10. Mähdrescher nach Anspruch 9, dadurch gekennzeichnet, daß ein erster Antriebsriemen (31) um eine in der Strohverteiler-Schwenkachse (11) drehbar gelagerte, angetriebene Rolle (23) geführt ist, auf deren Achse eine zweite, den Strohverteiler (7) über einen zweiten Antriebsriemen (25) antreibende Rolle (24) sitzt.

11. Mähdrescher nach Anspruch 9, dadurch gekennzeichnet, daß der Riementrieb (31; 41) über Rollen (33, 34; 43, 44) geführt ist, die gehäusefest oder auf dem Rahmen (49) des Strohverteiles (7) derart drehbar gelagert sind, daß die Riemenspannung bei einer Verschwenkung des Strohverteilers (7) gleichbleibt.

12. Mähdrescher nach Anspruch 11, dadurch gekennzeichnet, daß für die Rollen (33, 34; 43, 44) abstützende Federn (37, 38; 47, 48) vorgesehen sind.

Fig. 1

Schnitt siehe Fig. 2

Fig. 2

Schnitt aus Fig.1

Fig. 3

Fig.4

Fig. 5

EP 0 357 090 A2

Fig. 6

Fig. 7

15 JUNI '89 11:56 BISO B

EP 0 357 090 A2

P.3/7

Fig. 8